# EUROPÄISCHE PATENTSCHRIFT

(11) **EP 0 921 898 B1**
(45) Veröffentlichungstag und Bekanntmachung des Hinweises auf die Patenterteilung: **01.08.2001**
(21) Anmeldenummer: 97920537.4
(22) Anmeldetag: 22.03.1997
(51) Int. Cl.: B23Q 1/26, B23Q 1/62

(54) **WERKZEUGMASCHINENSYSTEM**
MACHINE TOOL SYSTEM
SYSTEME DE MACHINE-OUTIL

(30) Priorität: 18.07.1996 DE 19628921
(43) Veröffentlichungstag der Anmeldung: 16.06.1999
(73) Patentinhaber: Wiemers, Karl-Heinz, 39179 Ebendorf (DE)
(72) Erfinder: Wiemers, Karl-Heinz, 39179 Ebendorf (DE)
(74) Vertreter: Leinung, Günter
(86) Internationale Anmeldenummer: DE9700588
(87) Internationale Veröffentlichungsnummer: WO9803300

(56) Entgegenhaltungen:
- DE-A- 3 432 842
- US-A- 4 129 291
- US-A- 4 471 331
- US-A- 4 684 315
- US-A- 4 750 721

## Beschreibung

Die Erfindung betrifft ein Werkzeugmaschinensystem zur mechanischen Bearbeitung von symmetrischen und asymmetrischen Werkstücken.

Die mechanische Bearbeitung von Werkstücken wird auf Werkzeugmaschinen wie Drehmaschinen, Fräsmaschinen oder auch Bohrwerken vorgenommen, wobei bereits auch sogenannte Fertigungssysteme bekannt geworden sind und CNC-Bearbeitungsmaschinen zum Einsatz kommen.

Die Einbindung einzelner Werkzeugmaschinen oder auch Maschinensystemen in Fertigungsstraßen wird in der Praxis angewendet, um die Nebenzeiten bei der mechanischen Bearbeitung zu senken und somit die Produktivität und auch Fertigungsmöglichkeiten zu erhöhen.
Um diesen Forderungen zu entsprechen, sind bereits Lösungen vorgestellt worden, die solche Vorgänge wie das Spannen und Lösen von Werkstücken auf Werkzeugspannplatten, das Positionieren von Werkstücken zum Bearbeitungswerkzeug, die Verstellmöglichkeiten vom zu bearbeitenden Werkstück zum Bearbeitungswerkzeug als auch die Antriebsmöglichkeiten betreffen.

So bezieht sich die DE-OS 21 02 234 auf einen Antrieb für die Bewegung von Werkzeugträgern innerhalb einer Fertigungsstraße, die auf einer Transportbahn in vorbestimmte Positionen verbracht werden.
Dies wird dadurch erreicht, daß als Kraftquellen mehrere wechselweise und durch Impulserregung zusammenwirkende Primär- und Sekundärteile in an sich bekannten Linearmotoren Anwendung finden. Die Primärteile sind in Abständen sowohl einzeln als auch gruppenweise auf der Transportbahn verteilt, und die Sekundärteile sind am Werkzeugträger angeordnet. Die in Gruppen angeordneten Primärteile liegen parallel oder winklig zueinander. Bestimmte Primärteilgruppen sind durch vom Werkzeugträger betätigte Schalter in aufeinander folgendem Wechsel an ein Drehstrom- oder Gleichstromnetz anschließbar. Jedes der Sekundärteile besteht aus einer Platte mit hoher magnetischer Leitfähigkeit, welche dem Primärteil zugewandt, mit einer Platte hoher elektrischer Leitfähigkeit belegt ist, und beide sind länger als jedes der wie sie gerichteten Primärteile. In die Platte mit hoher elektrischer Leitfähigkeit sind quer zu ihr zwei parallele Streifen mit hoher magnetischer Leitfähigkeit eingebettet, von denen jeder breiter ist als die Breite der Nuten der Primärteile und deren gegenseitiger Mittenabstand dem zweier ungleichnamiger Pole der Primärteile entspricht.

Bei dieser Lösung wird zwischen dem Werkzeugträger und der Transportbahn ein Luftpolster aufgebaut, und ein an sich bekannter Linearmotor wird als Antrieb verwendet.

Das Aufspannen oder Heben von Werkstücken mittels einer Magnetspannplatte ist bekannt und die EP 0357904 A 1 beschreibt eine Magnetspannplatte, die nicht nur Werkstücke aus unterschiedlichem Material, auch aus schwach oder nicht-magnetischem Material sicher halten kann, sondern deren Oberfläche so gestaltet ist, daß an keiner Stelle die Unterstützung des Werkstückes fehlt aber nach wie vor eine sichere und gute Übertragung eines Vakuums, des ungehinderten Luftdurchtrittes, möglich ist.
Es werden dann zwei Ausführungsformen beschrieben. Bei der einen Ausführungsform sind die Schlitze oder Bohrungen in den magnetischen Polabschnitten zwischen den aus nichtferromagnetischem Material bestehenden Polleitungen ausgebildet und mit feinporigem Sintermetall gefüllt. Bei der anderen Ausführungsform sind die Schlitze in den Polleitungen vorgesehen und ebenfalls mit feinporiegem Sintermetall gefüllt, welches in diesem Fall nicht ferromagnetisch ist.
Mit dieser vorgestellten kombinierten Vakuum-Magnetspannplatte wird zwar ein Spannen mittels Magnetkräften erreicht, weitere Möglichkeiten, wie beispielsweise der Positionierung oder das Verfahren von auf einer Spannplatte vorgesehenen Werkstückes, ist mit dieser Lösung nicht möglich.

Mit der EP 0637482 A 1 wird ein Verfahren zum Positionieren eines Werkzeugträgers in einer Bearbeitungsmaschine sowie zugehöriger Werkzeugträger vorgestellt, bei dem der Werkstückträger in eine annähernd der Soll-Position entsprechende Position gebracht und fixiert wird und daß anschließend dessen Ist-Positon anhand zumindestens zweier, am Werkstückträger angebrachter Refferenzmarken bestimmt wird. Das Ausmessen der im Werkzeugträger eingespannten Werkstücke erfolgt an einem speziell dafür ausgerüsteten Meßplatz. Die so ermittelten Meßdaten werden auf die Bearbeitungsmaschine übertragen. Die effektive Lage der Werkstücke auf der Bearbeitungsmaschine kann dann anhand der Position der Refferenzmarken errechnet werden. Im weiteren wird ein Werkzeugträger vorgeschlagen, welcher zumindest zwei in horizontalem Abstand voneinander angeordnete Refferenzmarken zum Erfassen seiner Lage in X- und in Y-Richtung sowie seiner Winkellage um die Z-Achse aufweist.
Dieses Verfahren bezieht sich zwar auf das Positionieren eines Werkzeugträgers in einer Bearbeitungsmaschine, die Realisierbarkeit dieses Verfahrens ist jedoch sehr aufwendig, die vorgesehenen Spannelemente dienen dem Aufspannen und Fixieren des Werkstückträgers, wobei das eigentliche Spannen mechanisch, vorzugsweise durch Federkraft und das Lösen pneumatisch erfolgen soll.

Die beschriebenen bekannten Lösungen betreffen ausschließlich einzelne Verfahrensstufen oder Verfahrensabläufe an Werkzeugmaschinen, kombinierte oder mehrere kontinuierlich ablaufende Vorgänge sind mit den genannten Lösungen nicht möglich.

Aufgabe der vorliegenden Erfindung ist es, ein Werkzeugmaschinensystem für die spanabhebende Bearbeitung von symmetrischen und asymmetrischen Werkstücken zu entwickeln, welches die Aufnahme von Werkstücken auf Spanneinrichtungen innerhalb des Systems, ihre Positionierung zueinander und den Vorschubantrieb ermöglicht, wobei die Positionierung der Werkstücke durch ein CNC-System realisiert wird, welches auf die Bearbeitungswerkzeuge, die magnetische Hub-, Antriebs- und Verspannkräfte sowie den mechanischen Vorschub einwirken.

Die Aufgabe wird erfindungsgemäß durch die im Anspruch 1 herausgestellten Merkmale gelöst.

Das erfindungsgemäße Werkzeugmaschinensystem besteht aus einer Maschinenbasis mit einem in Wirkverbindung stehenden Maschinenportal, welches seitlich auf dem Maschinenfundament abgestützt und die Maschinenbasis übergreift. Eine paarweise Anordnung von Maschinenportalen gehört auch zur Erfindung, bei diesem Anwendungsfall sind die Maschinenportale dann beidseitig zur Maschinenbasis angeordnet, übergreifen dieses, sind jeweils auf dem Maschinenfundament abgestützt und besitzen Einrichtungen für die Aufnahme der Bearbeitungswerkzeuge.

Die Maschinenbasis selbst ist so ausgestaltet, daß diese zur Aufnahme und Führung einer Spanneinrichtung, ein Aufnahmebett besitzt, welches in der Längsachse der Maschinenbasis, also in X-Achse, verfahrbar ist.
Dem Aufnahmebett ist eine magnetisch stützbare, verspannbare und positionierbare Spanneinrichtung zugeordnet mit der ermöglicht wird, daß die aufzunehmenden Werkstücke auf der Spannplatte verspannt werden, die gesamte Spanneinrichtung mit Hilfe von Magnetkräften angehoben, verfahren und positioniert sowie abgesenkt und mit dem Aufnahmebett magnetisch, vorzugsweise mittels Hybridmagneten, verspannt werden kann.

Es gehört auch zur Erfindung, daß die Spanneinrichtung von einem Magnethaltering umgeben ist, der zur Aufnahme der Spanneinheit geöffnet werden kann und in dem Hebe- und Antriebsmagnete angeordnet sind.
Der Freiheitsgrad zwischen dem Magnethaltering und der Basisplatte der Spanneinrichtung, als auch der Freiheitsgrad zwischen dem Magnethaltering und dem Tragring der Spannplatte ist so gewählt, daß die gesamte Spanneinrichtung rotativ sowie planear verfahren und positioniert werden kann. Es ist also sichergestellt, daß die gesamte Spanneinrichtung horizontal in den X- und Y-Achsen als auch um ihre eigene Achse, um die Z-Achse, verfahren und positioniert werden kann, je nach der erforderlichen Position zu den Bearbeitungswerkzeugen.
Die horizontale Verstellung in Richtung der X-Achse erfolgt zusätzlich über eine im Aufnahmebett vorhandene Hauptspindel, mittels der die gesamte Spanneinrichtung mit dem Werkstückaufnahmebett in der X-Achse zum Werkzeug verfahren werden kann.

Die horizontale Verstellung in Richtung der Y-Achse erfolgt zusätzlich durch den magnetisch gestützten Quertransport der Maschinenbasis.

Es gehört auch zur Erfindung, daß die Maschinenportale sowohl in X-Achse als auch in Y-Achse teleskopierend zum gesamten Werkzeugmaschinensystem verfahren werden können und bevorzugterweise die Maschinenbasis, bis auf die Spannplatte, unterhalb des Fußbodens in einem besonders ausgestalteten Flurkanal angeordnet ist.
Je nach Ausführungsvariante und größenmäßiger Ausgestaltung der Maschinenbasis wird der Magnethaltering über bestimmte Trägerstützen, welche z. B. auf Rollen zum Maschinenfundament gelagert sind, abgestützt.

Das erfindungsgemäße Werkzeugmaschinensystem ist somit gekennzeichnet durch die Basismodule eines Aufnahmebettes, einer aus einer Basisplatte, einem Tragring und einer Spannplatte bestehenden Spanneinrichtung sowie einem Magnethaltering, welcher mit dem Aufnahmebett verbunden ist, die Basisplatte der Spanneinrichtung umgreift, mit der Spanneinrichtung in Wirkverbindung steht und schwenkbar ausgebildet ist.
Im Aufnahmebett sind dabei magnetische Spannelemente vorgesehen und der Magnethaltering ist mit Hebe- sowie Antriebsmagneten ausgerüstet.

Das Verstellen und Positionieren der Spanneinrichtung erfolgt im angehobenen, d. h. in einem Schwebezustand, da die vorhandenen Hebemagnete die Spanneinrichtung derart vom Aufnahmebett abheben, daß sowohl zwischen diesen beiden Teilen als auch zwischen der Basisplatte und dem Magnethaltering Luftspalte gegeben sind, so daß die Positioniervorgänge berührungslos erfolgen.

Weitere Merkmale und Vorteile der Erfindung ergeben sich aus der nachfolgenden Beschreibung des in der Zeichnung dargestellten Ausführungsbeispieles.

In der Zeichnung zeigen
- Fig. 1:: eine prinziphafte Darstellung des Werkzeugmaschinensystems, teilweise im Schnitt
- Fig. 2 :: eine Draufsicht nach Figur 1
- Fig. 3:: die Ausbildung des Magnethalteringes als Doppelmagnethaltering
- Fig. 4:: Magnetring in Kombination von Trag/Haltemagnet und Antriebseinheiten
- Fig. 5:: Prinzip der vollen Magnetdeckung der Basisplatte bei kombinierter Trag-/ Haltemagnet- und Antriebseinheiten
- Fig. 6:: Prinzip der teilweisen Magnetdeckung der Basisplatte bei kombinierter Trag-/ Haltemagnet- und Antriebseinheiten
- Fig. 7:: Prinzip der kombinierten Basis- und Rotorplatte
- Fig. 8:: Prinzip der getrennten Basis- und Rotorplatte

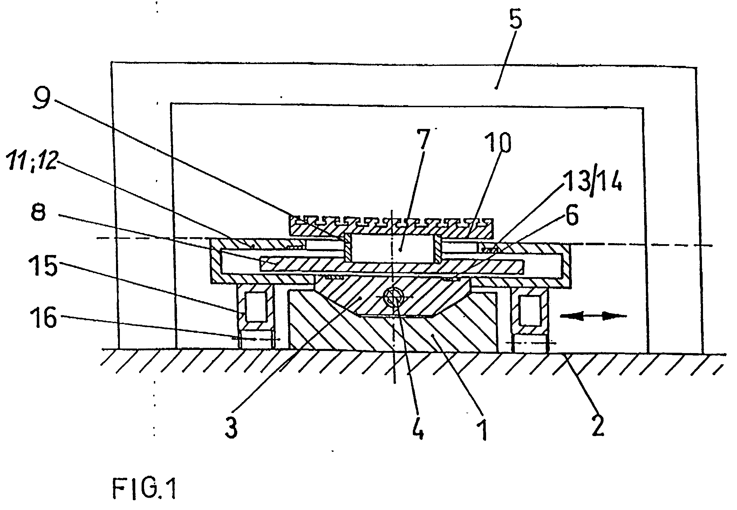

Eine Gesamtansicht des gesamten Werkzeugmaschinensystems gibt die Figur 1 wider, wobei aus der Figur 1 ersichtlich wird, daß es sich bei diesem dargestellten Werkzeugmaschinensystem um eine Fräsmaschine bzw. um ein Bohrwerk handelt und bewußt eine prinziphafte Darstellung gewählt wurde.

Die Maschinenbasis 1 ist als Maschinenbett ausgebildet, welches auf dem Maschinenfundament 2 ruht, auf den Querführungen 20 magnetisch gestützt verfahrbar ist und welches an seiner oberen Seite eine besondere Aussparung besitzt, in der das Aufnalmebett 3 gelagert und verfahren werden kann. Innerhalb des Aufnahmebettes 3 ist eine Hauptspindel 4 vorgesehen, über die die Längsbewegung des Aufnahmebettes 3 möglich ist. Diese Längsbewegung ist eine Bewegung in Richtung der X-Achse und wird über einen nicht näher dargestellten Antrieb realisiert.

Das bzw. die Maschinenportale 5 übergreifen das Werkzeugmaschinensystem und sind selbst mit dem Maschinenfundament 2 einseitig verbunden und können andererseits über die Querführung 20 magnetisch gestützt in Y-Richtung teleskopierend verfahren werden. An den Maschinenportalen 5 sind dabei die entsprechenden Aufnahmen für die Bearbeitungswerkzeuge vorgesehen, welche der Einfachheit halber nicht näher dargestellt sind, da diese nicht unmittelbar zum Erfindungsgegenstand gehören.

Im Modul Aufnahmebett 3 sind oberhalb, daß heißt nicht auf den Gleitflächen des Aufnahmebettes 3, sondern auf ihrer Spannfläche, Spannelemente 6 vorgesehen, die bevorzugterweise als Hybridmagnete ausgebildet sind, d. h. die in ihrer Wirkweise eine Kombination aus E- und P-Magneten darstellen (Elektro- und Permanentmagnete).

Das zweite Grundmodul des Werkzeugmaschinensystems ist die magnetisch gestützte und verspannbare Spanneinrichtung 7, welche aus der Basisplatte 8, dem Tragring 9 und der Spannplatte 10 besteht.

In der Figur 1 ist diese Spanneinrichtung 7 im weitesten Sinne im Schwebezustand dargestellt, diese Darstellung ist deshalb gewählt worden, damit unmittelbar die einzelnen Elemente des gesamten Systems deutlich werden. In der Praxis, während der Bearbeitungsvorgänge, liegt die gesamte Spanneinrichtung 7 auf dem Aufnahmebett 3 auf oder, während des

Verfahrens/Positionierens, wird sie vom Magnethaltering 11 im Schwebezustand gehalten. Dieser Magnethaltering 11 stellt das dritte Grundmodul des Systems dar.

Die gemäß der Werkstückkonfiguration auswechselbare Spannplatte 10 ist dabei in herkömmlicher Weise mit entsprechenden Längs- und Querspannuten ausgerüstet, auf der die zu bearbeitenden Werkstücke direkt oder indirekt verspannt werden. Dieses Aufsetzen und Verspannen der Werkstücke kann sowohl innerhalb des Maschinensystems erfolgen als auch außerhalb desselben, wobei dann die gesamte Spanneinrichtung 7 als Werkstückpalette aus dem Werkzeugmaschinensystem herausgenommen und nach seiner Bestückung wieder eingesetzt werden kann.

Der Magnethaltering 11 ist am Aufnahmebett 3 befestigt und übergreift die Basisplatte 8 der Spanneinrichtung 7, wobei die Basisplatte 8 so dimensioniert ist, daß zwischen dieser und dem Magnethaltering 11 ein definierter, konstant gehaltener Abstand vorhanden ist.

In analoger Weise besitzt das obere Teil 12 des Magnethalteringes 11 zum Tragring 9 einen ebenso definierten Abstand. Somit liegen genügend Freiheitsgrade vor, die gewährleisten, daß die gesamte Spanneinrichtung 7 entsprechend den jeweils erforderlichen Bedingungen verfahren und positioniert werden kann.

Im oberen Teil 12 des Magnethalteringes 11 sind Hebemagnete 13 und Antriebsmagnete 14 vorgesehen, die in wechselnder Folge mit ihren wirksamen Flächen zur Basisplatte 8 angeordnet sind.
Je nach Ausführung des Systems kann das gesamte Werkzeugaufnahmesystem einschließlich seiner Spanneinrichtung 7 und des Magnethalteringes 11 durch unterhalb des Magnethalteringes 11 vorgesehene Tragstützen 15 und Rollen 16 zum Maschinenfundament 2 abgestützt werden, was eine zusätzliche Lagerung darstellt, die sich positiv auf den gesamten Bearbeitungsablauf auswirkt.

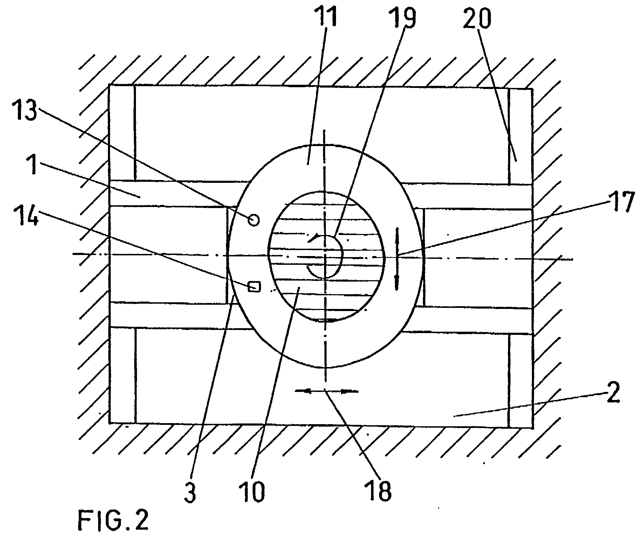

Die Ausgestaltung und Zuordnung der Spannplatte 10 zum Magnethaltering 11 wird gleichfalls prinziphaft in der Figur 2 gezeigt, wobei mit 17 die Y-Richtung und mit 18 die X-Richtung bezeichnet sind. Die rotationssymmetrische Verstellung der gesamten

Spanneinrichtung 7 ist mit der Pfeilrichtung 19. gekennzeichnet, sie verdeutlicht die rotative Bewegung der Spanneinrichtung 7 um ihre eigene Achse, in Z-Richtung.

Aus dieser Darstellung in der Figur 2 ergibt sich gleichfalls, daß die gesamte Maschinenbasis 1 auch mit Querführungen 20 ausgebildet sein kann, über welche die Maschinenbasis 1, gleichfalls magnetisch gestützt, zu den Maschinenportalen 5, verfahrbar ist.

Die Anordnung der Hebemagnete 13 und Antriebsmagnete 14 ergibt sich auch aus der Figur 2. Sie sind umfangsseitig im Magnethaltering 11 abwechselnd angeordnet und dienen zum Anheben der gesamten Spanneinrichtung 7 als auch zur Verstellung derselben in den bereits bezeichneten Ebenen in der Horizontalen.

Die Basisplatte 8 kann aus unterschiedlichem Material hergestellt sein, verständlicherweise muß ein Teil dieses Materials magnetisch sein.

### Zum funktionellen Ablauf

Über die Hauptspindel 4 wird das Aufnahmebett 3 aus dem Wirkbereich des/der Maschinenportale 5 verfahren, so daß auf die auswechselbare Spannplatte 10 die zu bearbeitenden Werkstücke aufgesetzt und verspannt werden können.
Durch die Variierbarkeit des gesamten Systems, einschließlich der aufgespannten Werkstücke auf der Spannplatte 10, besteht die Möglichkeit, das zu bearbeitende Werkstück zu den jeweiligen an den Maschinenportalen 5 vorgesehenen Werkzeugen zu positionieren, was je nach technologischer Forderung vielfach wiederholbar ist.

Im Bearbeitungszustand befindet sich die Spanneinrichtung 7 in ihrer abgesenkten Position, d. h. die Basisplatte 8 liegt auf dem Aufnahmebett 3 auf und wird mittels der in diesem Aufnahmebett 3 vorhandenen Spannelemente 6 mittels deren Magnetkräfte verspannt.

Ein Abheben wird dadurch erreicht, daß die Spannelemente 6, die vorzugsweise als Hybridmagnete ausgebildet sind, umgeschaltet werden, so daß ihre Magnetkraft gegen 0 gesetzt wird. Gleichzeitig werden die Hebemagnete 13 aktiviert, und die gesamte Spanneinrichtung 7 kann im Magnethalteringe 11 in den Schwebezustand verbracht und dort kontrolliert gehalten werden.
Eine rotative Verstellung der Spanneinrichtung 7 in Pfeilrichtung 19, der Z-Richtung, wird dadurch erreicht, daß die gleichfalls im oberen Teil 12 des Magnethalteringes 11 vorgesehenen Antriebsmagnete 14 aktiviert werden, diese die Spanneinrichtung 7 um ihre eigene Achse umfangsseitig und planear verstellen. Wenn die jeweils gewünschte Position erreicht ist, werden die Hebe- und Antriebsmagnete 13; 14 umgeschaltet, die Spannelemente 6 polarisiert und die Spanneinrichtung 7, unter Wahrung der erreichten Positionierung, auf dem Aufnahmebett 3 abgesetzt und dort verspannt.

Die einzelnen eingesetzten Magnete sind so regelbar, daß beispielsweise die Hebemagnete 13 auf der Basis ferromagnetischer Zugkräfte einen Luftspalt zwischen dem oberen Teil 12 des Magnethalteringes 11 und der Basisplatte 8 bilden und diesen sichern. So auch den Luftspalt zwischen der Basisplatte 8 und dem Magnethaltering 11 zum Aufnahmebett 3.

Die gewählten Magnetanordnungen und ihre Ausbildung sichern, daß die Magnetkräfte leistungslos bereit gestellt werden können. Somit kann die schwebende Spanneinrichtung 7 ohne zusätzliche Bewegungselemente wie Zahnstangen, Spindeln, Linearmotoren oder ähnlichem und ohne zusätzliche Medien wie Luft, Öl oder ähnlichen rotativ sowie planear verfahren und positioniert werden.

Die wesentlichen Vorteile der erfindungsgemäßen Lösung liegen in der Verringerung der Bearbeitungszeiten auf Werkzeugmaschinen, da die Maschinenrüstzeiten auf Grund der schnellen Positionierung der Werkstücke wesentlich verkürzt werden. Das Lösen und Verspannen der Spanneinrichtung erfolgt ohne zusätzliche Einrichtungen, ausschließlich mittels Magnetkräften. Da die Positionierbewegungen berührungslos erfolgen, werden keine Schmiermittel zwischen der Basisplatte 8 und dem Aufnahmebett 3 benötigt. Ebenso erfolgen diese Positionierbewegungen zwischen den Baugruppen verschleißfrei, was die Laufruhe und die Lebensdauer wesentlich erhöht und positiv beeinflußt.

Ein weiterer Vorteil des vorgstellten Werkzeugmaschinensystems liegt darin, daß die als kompakte Baugruppe ausgebildete Spanneinrichtung 7 auswechselbar in dem Werzeugmaschinensystem vorgesehen ist und in seiner Komplexheit aus diesem System entnommen und einem anderen Maschinensystem zugeordnet werden kann, welches verständlicherweise in gleicher Weise programmiert ist und die Positionierung nach einem gleichen Programmsystem abläuft. Dieses Entnehmen und das Einsetzen in ein anderes Werkzeugmaschinensystem, welches als ein Robotsystem, als eine weitere mechanische Bearbeitungseinheit oder auch einer Oberflächenbeschichtungseinrichtung ausgebildet sein kann, kennzeichnet die Flexibilität der vorgeschlagenen neuen Lösung, so beispielsweise der Einsatz in Transferfertigungsstraßen.

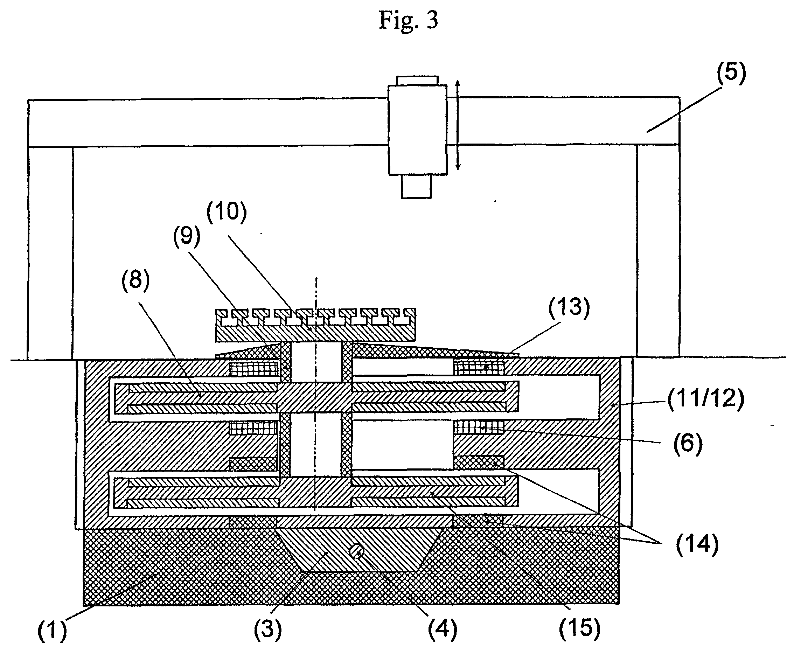

Die folgenden Ausführungen beziehen sich auf eine weitere Form der Ausgestaltung des Magnethalteringes 11, welcher als Doppelmagnethaltering 11; 12 ausgebildet ist. Die Beschreibung nimmt Bezug auf die Figuren 3-8. Im oberen Magnethaltering 11; 12 sind die Basisplatte 8 gelagert und dieTragmagneteinheit 13 und die Haltemagneteinheit 6 angeordnet.

Im unteren Teil des Doppelmagnethalteringes 11; 12 befinden sich eine Rotorplatte 15 und die Antriebseinheiten 14, die im oberen und im unteren Bereich dieses Halteringes 11; 12 vorgesehen sind.

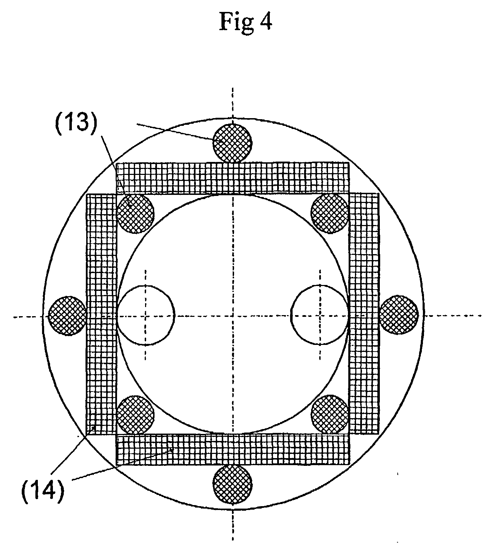

Die Kombination von Trag-/Haltemagneten 13; 6 und Antriebseinheiten 14 ergibt sich aus der Figur 2, welche die obere Ausführung des Magnethalteringes 11; 12 zeigt, d. h. die Tragmagnete 13 sind in wechselnder Folge angeordnet und bildhaft in den Figuren 3, 4 gezeigt, wobei die Figur 4 eine Anordnung der Tragmagneteinheiten 13 und der Antriebseinheiten 14 wiedergibt.

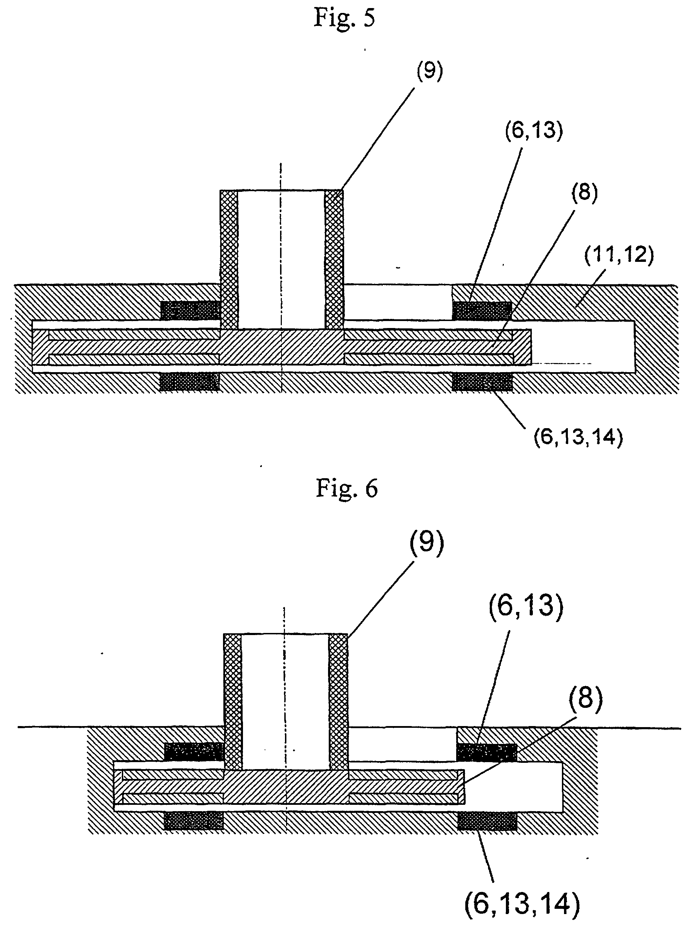

Die Darstellung bzw. Anordnung des Basisplatte 8 zu den kombinierten Trag-/Haltemagneten 13; 6 sowie den Antriebseinheiten 14 ergibt sich aus den Figuren 5 und 6. Diese Anordnung ist sinnvoll, um die Werkstücke auf der Spannplatte 10 rotativ und planar in Schwebezustand zu positionieren.
Dies erfolgt über die Antriebsmagnete 14 und nach dem Absetzen der Basisplatte 8 wird diese über die Haltemagnete 6 gegen Verschiebung gesichert.

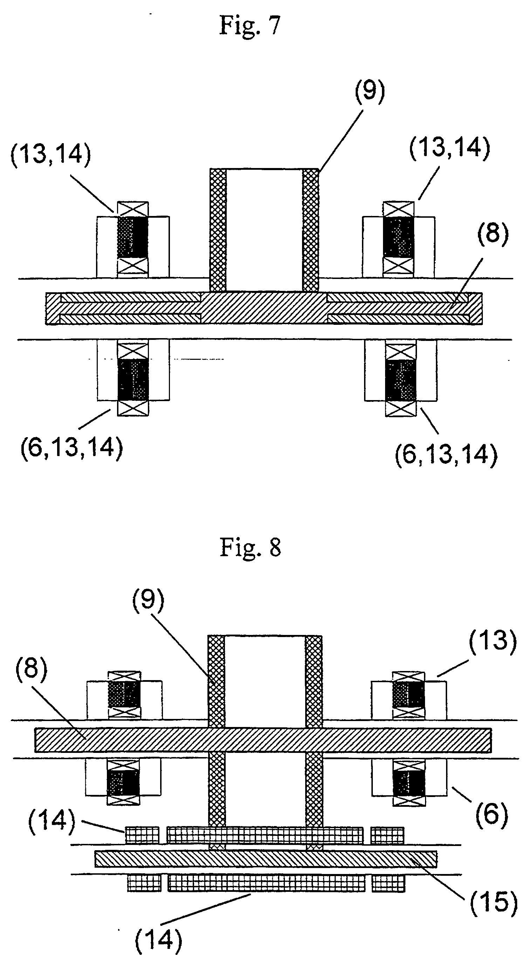

In der Figur 7 wird gezeigt, wie zur Basisplatte 8 die einzelnen Halte-Antriebs- und Tragmagnete 6; 13, 14 positioniert werden können. Dies kann einmal in der Form erfolgen, daß eine Kombination aus Trag- und Antriebsmagnet 13; 14 gewählt wird, die dann oberhalb der Basisplatte 8 angeordnet sind, während die Antriebseinheiten 14, die Trag- und Haltemagnete 6; 13 in einer Kombination unterhalb der Basisplatte 8 vorgesehen sind.

Die Figur 8 zeigt in ihrer prinziphaften Darstellung die Zuordnung der Tragmagnete 13 und der Haltemagnete 6 zur Basisplatte 8 und es ist dargestellt, wie die Basisplatte 8 über die Rotorplatte 15 angetrieben wird. Dies erfolgt in der Weise, daß die Rotorplatte 15, welche mit der Basisplatte 8 und dem Tragring 9 verbunden ist, über die Tragmagnete 13 angehoben wird und über die die Antriebsmagnete 14, welche als Linearmotoren ausgebildet sind, angetrieben wird. Nach der entsprechenden Positionierung bzw. Verstellung werden die Basisplatte 8 als auch die Rotorplatte 15 abgesenkt und die Basisplatte 8 wird über die Haltemagnete 6 verspannt.

## Patentansprüche

1. Werkzeugmaschine zur mechanischen Bearbeitung von symmetrischen und asymmetrischen Werkstücken, wobei
- in einem Maschinenbett (1) ein in seiner Längsrichtung, in X-Richtung (18), verfahrbares Aufnahmebett (3) gelagert und dem gleichfalls ein geteilter und schwenkbarer Magnethaltering (11) zugeordnet ist, welcher eine mittels Magnetkräften spannbare, anhebbare, verfahrbare und in Längs- (18) und Querrichtung (17) positionierbare Spanneinrichtung (7) aufnimmt,
- die Spannrichtung (7) aus einer oberhalb des Aufnahmebettes (3) angeordneten Basisplatte (8), einer Spannplatte (10) und einem zwischen Basisplatte (8) und Spannplatte (10) vorgesehenen Tragring (9) besteht,
- die Basisplatte (8) mit seitlichen, oberen und unteren Abständen im Magnethaltering (11) und zu diesem positionierbar vorgesehen ist,
- dem Aufnahmebett (3) auf seiner Auflagefläche magnetische Spannelemente (6) zugeordnet sind, mittels der die Basisplatte (8) mit dem Aufnahmebett (3) verspannt wird und
- der gesamten Werkzeugmaschine ein oder mehrere vertikal verfahrbare Maschinenportale (5), die mit dieser in Wirkzusammenhang stehen, zugeordnet sind.

2. Werkzeugmaschine nach dem Anspruch 1, dadurch gekennzeichnet, daß
im oberen Teil (12) des Magnethalteringes (11) umfangsseitig und in wechselnder Folge Hebemagnete (13) und Antriebsmagnete (14) vorgesehen sind.

3. Werkzeugmaschine nach den Ansprüchen 1 und 2, dadurch gekennzeichnet, daß
die Spannelemente (6) als Hybridmagnete, die Hebe- und Antriebsmagnete (13; 14) als Elektromagnete und/oder Permanentmagnete/Hybridmagnete ausgeführt sind.

4. Werkzeugmaschine nach einem der Ansprüche 1 bis 3, dadurch gekennzeichnet, daß
das Maschinenbett (1) auf Querführungen (20) in Y-Richtung (17) verfahrbar ist.

5. Werkzeugmaschine nach einem der Ansprüche 1 bis 4, dadurch gekennzeichnet, daß
das Maschinenbett (1) mit dem darauf angeordneten Aufnahmebett (3) und dem zugeordneten Magnethaltering (11) unterhalb der Flurebene in einem gesonderten Flurkanal angeordnet sind.

6. Werkzeugmaschine nach einem der Ansprüche 1 bis 5, dadurch gekennzeichnet, daß
die gesamte Spanneinrichtung (7) mittels der vorgesehenen Hebemagnete (13) anhebbar ist, somit Luftspalte zwischen der Basisplatte (8) zum Aufnahmebett (3) und zum oberen Teil (12) des Magnethalteringes (11) gebildet werden und in diesem Schwebezustand die Spanneinrichtung (7) über die Antriebsmagnete (14) in X-Richtung (18), in Y-Richtung (17) sowie auch rotativ um die Z-Achse (19) verstellbar und positionierbar ist.

7. Werkzeugmaschine nach einem der Ansprüche 1 bis 6, dadurch gekennzeichnet, daß
die Spanneinheit (7) als kompakte Baugruppe auswechselbar im Maschinenbett (1) gelagert ist und die auswechselbare Spannplatte (10) einem anderen Maschinensystem zugeführt werden kann, wobei dieses Maschinensystem mit der Spanneinrichtung (7) ausgerüstet sein muß und die anderen Maschinensysteme als Robotsysteme, mechanische Bearbeitungseinrichtungen oder auch als Oberflächenbeschichtungseinrichtungen ausgebildet sein können.

8. Werkzeugmaschine nach einem der Ansprüche 1 bis 7, dadurch gekennzeichnet, daß
die Spannplatte (10), entsprechend der Werkstückkonfiguration, in der Spanneinrichtung (7) fest oder auswechselbar angeordnet ist.

9. Werkzeugmaschine nach einem der Ansprüche 1 bis 8, dadurch gekennzeichnet, daß
die Maschinenportale (5) einseitig fest mit dem Maschinenfundament (2) verbunden sind, während die gegenüberliegenden Stützen der Maschinenportale (5) auf den Querführungen (20) in Y-Richtung (17) verfahrbar angeordnet sind.

10. Werkzeugmaschinensystem nach Anspruch 1, dadurch gekennzeichet, daß
der Magnethaltering (11) als Doppelmagnethaltering (11) ausgebildet ist, in dessen oberen Teil die Basisplatte (8) und dessen unterem Teil eine Rotorplatte (15) angeordnet sind.

11. Werkzeugmaschinensystem nach Anspruch 11, dadurch gekennzeichnet, daß
im oberen Teil des Magnethalteringes (11) Tragmagnete (13) und Haltemagnete (6) und im unteren des Magnethalteringes (11) Antriebsmagnete (14) angeordnet sind.

12. Werkzeugmaschinensystem nach den Ansprüchen 1, 11 und 12, dadurch gekennzeichnet, daß
der Basisplatte (8) oberhalb die Trag- und Antriebsmagnete (13), (14) und unterhalb die Trag- und Antriebsmagnete (13), (14) sowie die Haltemagnete (6) zugeordnet sind.

## Claims

1. Tool machine for the mechanical processing of symmetrical and asymmetrical workpieces, whereby:
- an accommodation bed (3) displaceable in its longitudinal direction, in X direction (18) is bedded in a base (1) and to which a split and pivotable magnet retainer ring (11) is also assigned which seats a clamping device (7) which is clamped, lifted, displaced and positioned in longitudinal (18) and cross direction (17) by means of magnetic forces.
- the clamping device (7) consists of a base plate (8), a clamp plate (10) and a mounting ring (9) between base plate (8) and clamp plate (10) provided above the accommodation bed (3)
- the base plate (8) is provided with lateral, superior and inferior spacing in the magnetic retainer ring (11) and which can be positioned to the latter
- magnetic clamping elements (6) are assigned to the accommodation bed (3) on its bearing surface which is clamped by means of the base plate (8) with the accommodation bed (3)
- one or several vertically displaceable machine portals (5) connected with this operation, are assigned to the entire tool machine

2. Tool machine as in Claim 1, characterised by
lift magnets (13) and drive magnets (1) being provided in the superior part (12) of the magnet retainer ring (11) around the circumference in alternating sequence

3. Tool machine as in Claims 1 and 2, characterised by
the clamp elements (6) being constructed as hybrid magnets, the lift and drive magnets (13; 14) as electro magnets and/or permanent magnets/hybrid magnets.

4. Tool machine as in one of the Claims 1 to 3, characterised by
the machine base (1) being displaceable on cross guides (20) in Y-direction (17)

5. Tool machine as in one of the Claims 1 to 4, characterised by
the machine base (1) with the accommodation (3) bed arranged on it and the assigned magnet retainer ring (11) being arranged beneath hall level in a special hall duct.

6. Tool machine as in one of the Claims 1 to 5, characterised by
the entire clamping device (7) being in a position to be hoisted via the provided lift magnets (13). Thus air spaces are formed between the base plate (8) to the accommodation bed (3) and to the superior part (12) of the magnet retainer ring (11) and in this suspended condition the clamping device (7) being in a position to be adjusted and positioned via drive magnets (14) in X-direction (18), in Y direction (17) and rotated by the Z axis (19).

7. Tool machine as in one of the Claims 1 to 6, characterised by
the clamping unit (7) being exchangeable and bedded in the machine base (1) and the exchangeable clamp plate (10) which can be admitted to another machine system, whereby this machine system must be fitted with the clamp device (7) and the other machine systems can be designed as robot systems, mechanical processing devices or as surface coating devices.

8. Tool machine as in one of the Claims 1 to 7, characterised by
the clamp plate (10), corresponding to workpiece configuration, being arranged fixed or exchangeable in the clamping unit (7)

9. Tool machine as in one of the Claims 1 to 8, characterised by
the machine portals (5) being permanently connected to the machine foundation (2) while the connections of the machine portals (5) on the opposite side on the cross guides (20) in Y-direction (17) being arranged as displaceable.

10. Tool machine systems as in Claim 1, characterised by
the magnet retainer ring (11) being formed as double-magnet retainer ring (11) in the superior part on which the base plate (8) and its inferior part, a rotor plate (15) are arranged.

11. Took machine system as in Claim 11, characterised by
lift magnets (13) and mounting magnets (6) being arranged in the superior part of the magnet retainer ring (11) and drive magnets (14) in the inferior magnet retainer ring (11).

12. Tool machine system as in Claims 1, 11, and 12, characterised by
the lift and drive magnets (13), (14) above and the lift and drive magnets (13), (14) below and the retainer magnet (6) being assigned to the base plate (8).

## Revendications

1. Machine-outil pour l'usinage mécanique de pièces à usiner symétriques et asymétriques, où
- un banc de réception (3) mobile dans sa direction longitudinal dans le sens des X (18) est logé dans un banc de machine (1) et est associé à un anneau de retenue magnétique séparé et pivotant (11), qui reçoit un dispositif de serrage (7) positionnable dans le sens transversal (17) et longitudinal (18), mobile, soulevable et serrable au moyen de forces magnétiques,
- le dispositif de serrage (7) se compose d'une plaque de base (8) disposée au-dessus du banc de réception (3), d'une plaque de serrage (10) et d'un anneau support (9) prévu entre la plaque de base (8) et la plaque de serrage (10),
- la plaque de base (8) est prévue avec des écarts latéraux, supérieurs et inférieures dans l'anneau de retenue magnétique (11) et est positionnable par rapport à ce dernier
- le banc de réception (3) est associé sur sa surface d'application à des éléments magnétiques de serrage (6) au moyen desquels la plaque de base (8) peut être serrée avec le banc de réception (3) et
l'ensemble de la machine-outil est associé à un ou plusieurs portiques de machine (5) mobiles verticalement qui coopèrent avec elle.

2. Machine-outil selon la revendication 1, caractérisée en ce que dans la partie supérieure (12) de l'anneau de retenue magnétique (11), il est prévu sur la périphérie et en alternance des électros de levage (13) et des aimants d'entraînement (14).

3. Machine-outil selon les revendications 1 et 2, caractérisée en ce que les éléments de serrage (6) sont réalisés comme des aimants hybrides, les électros de levage et les aimants d'entraînement (13; 14) comme des électroaimants et/ou des aimants permanents/des aimants hybrides.

4. Machine-outil selon l'une des revendications 1 à 3, caractérisée en ce que le banc de machine (1) est mobile sur des guides transversaux (20) dans le sens des Y (17).

5. Machine-outil selon l'une des revendications 1 à 4, caractérisé en ce que le banc de machine (1) avec le banc de réception (3) disposé dessus et l'anneau magnétique de retenue associé (11) sont disposés en dessous du niveau de sol dans un canal de sous-sol séparé.

6. Machine-outil selon l'une des revendications 1 à 5, caractérisée en ce que
tout le dispositif de serrage (7) est soulevable au moyen des électros de levage prévus (13), formant ainsi des entrefers entre la plaque de base (8) du banc de réception (3) et de la partie supérieure (12) de l'anneau de retenue magnétique (11) et dans cet état de flottement, le dispositif de serrage (7) est réglable et positionnable par les aimants d'entraînement (14) dans le sens des X (18), dans le sens des Y (17) ainsi qu'également en rotation autour de l'axe des Z (19).

7. Machine-outil selon l'une des revendications 1 à 6,
caractérisée en ce que
l'unité de serrage (7) est logée comme un composant interchangeable compact dans le banc de machine (1) et la plaque de serrage interchangeable (10) est amenée à un autre système de machine, ce système de machine devant être équipé du dispositif de serrage (7) et les autres systèmes de machine pouvant être des systèmes de robots, des dispositifs d'usinage mécanique ou des dispositifs de revêtement de surface.

8. Machine-outil selon l'une des revendications 1 à 7, caractérisée en ce que
la plaque de serrage (10) en fonction de la configuration de la pièce à usiner est disposée dans le dispositif de serrage (7) fixe ou interchangeable.

9. Machine-outil selon l'une des revendications 1 à 8, caractérisée en ce que les portiques de machine (10) sont reliés d'un côté de manière solidaire à la fondation de la machine (2), tandis que les supports opposés des portiques de machine (5) sont disposés mobiles sur les guides transversaux (20) dans le sens des Y (17).

10. Machine-outil selon la revendication 1, caractérisée en ce que
l'anneau de retenue magnétique (11) est conçu comme un double anneau de retenue magnétique (11) dans la partie supérieure duquel est disposée la plaque de base (8) et dans la partie inférieure duquel est disposée une plaque rotor (15).

11. Système de machine-outil selon la revendication 11, caractérisé en ce que
dans la partie supérieure de l'anneau de retenue magnétique (11) sont disposés des aimants supports (13) et des aimants de retenue (6) et dans la partie inférieure de l'anneau de retenue magnétique (11) sont disposés des aimants d'entraînement (14).

12. Système de machine-outil selon les revendications 1, 11 et 12, caractérisé en ce que
la plaque de base (8) est associée au-dessus aux aimants d'entraînement et de support (14), (13) et en dessous aux aimants de support et d'entraînement (13), (14) ainsi qu'aux aimants de retenue (6).
